(19)

Europäisches
Patentamt
European
Patent Office
Office européen
des brevets

(11) **EP 1 909 446 A2**

(12) **EUROPEAN PATENT APPLICATION**

(43) Date of publication:
**09.04.2008 Bulletin 2008/15**

(51) Int Cl.:
*H04L 27/26* (2006.01)

(21) Application number: **07018728.1**

(22) Date of filing: **24.09.2007**

<table>
<tr><td>

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **03.10.2006 JP 2006271455**
**15.12.2006 JP 2006338372**
**15.08.2007 JP 2007211717**
</td><td>

(71) Applicant: **NEC Corporation**
**Minato-ku**
**Tokyo (JP)**

(72) Inventor: **Iwasaki, Motoya**
**Tokyo 108-8001 (JP)**

(74) Representative: **Glawe, Delfs, Moll**
**Patentanwälte**
**Postfach 26 01 62**
**80058 München (DE)**
</td></tr>
</table>

(54) **Mobile communication system and its signal transfer method**

(57) A mobile communication system and a signal transfer method, which use a signal having a preferred signal length from the implementation view point, are disclosed. The sending device sends a notify signal in which the time length is defined to be such a time that the number of samples when sampling at the sampling frequency becomes the product of the exponentiation of the predetermined number of prime numbers from the smaller number. The receiving device detects the notify signal by performing predetermined signal processing on the signal received from the sending device.

Fig. 7

EP 1 909 446 A2

**Description**

This application is based upon and claims the benefit of priority from Japanese Patent Applications No. 2006-271455 filed on October 3, 2006, No. 2006-338372 filed on December 15, 2006, No. 2007-211717 filed on August 15, 2007, the contents of which are incorporated by references.

BACKGROUND OF THE INVENTION

1. Field of the Invention:

The present invention relates to communication between a base station device and a terminal device in a mobile communication system.

2. Description of the Related Art:

On an air interface between a base station device and a terminal device of a Long Term Evolution (LTE) mobile communication system, the logical channels of control signals and data signals are transferred through various transport channels according to the type thereof. Through a Random Access Channel (RACH), that is one example of a transport channel, a preamble and a message are transferred.

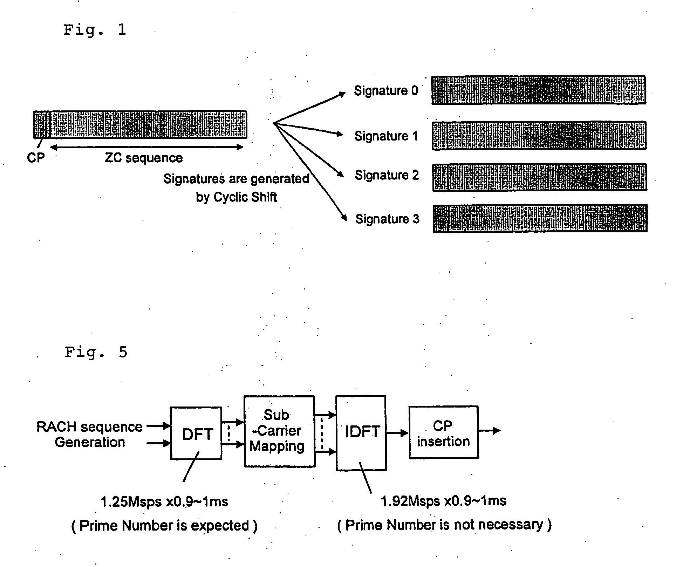

First, the terminal device generates a preamble when the preamble is transferred over the RACH. FIG. 1 is a diagram for illustrating a general method for generating a preamble. As shown in FIG. 1, a generating polynomial of a Zadoff-Chu Zero Correlation Zone (ZC-ZCZ) sequence is used to generate a ZC sequence from a predetermined parameter, and the ZC sequence is cyclic-shifted, thus the preamble is generated. Information called a signature, which is represented by the value of the parameter described above, the amount of cyclic shifts, or both of them, is attached to the generated preamble. The terminal device inserts a cyclic prefix (CP) into the generated preamble, and uses the RACH to send to an uplink the preamble into which the CP is inserted.

The base station device detects the preamble to be received from the uplink on the RACH. More specifically, the base station device calculates cross-correlation values between a plurality of predetermined preamble patterns and received signals, detects a preamble based on the cross-correlation values, and identifies the preamble sent from the terminal device.

Upon verifying that the preamble has been received from the terminal device, the base station device identifies the preamble and the signature, and notifies the terminal device that the preamble has been detected. Upon receiving the notification, the terminal device sends a message to the uplink using a shared channel.

However, the above mentioned technique has the following problem.

Various signals are sent/received over various transport channels between the base station device and the terminal device of the LTE mobile communication system. As described above, preambles are sent/received through the RACH, for example. However, concrete regulation of the length of a signal sent/received over these transport channels has not been defined. What is required is that a signal length, that would be effective from the point of view of implementation, be defined.

SUMMARY OF THE INVENTION

An exemplary object of the present invention is to provide a mobile communication system and a signal transfer method, which use a signal having a preferred signal length from the implementation view point.

In order to achieve the above object, the mobile communication system according to an exemplary aspect of the invention has a sending device and a receiving device.

The sending device sends a notification signal in which the time length is defined to be such a time that the number of samples, when sampling at the sampling frequency, becomes the product of the exponentiation of the predetermined number of prime numbers that are taken from the smaller number. The receiving device detects the notification signal by performing predetermined signal processing on the signal received from the sending device.

In addition, the signal transfer method of an exemplary aspect of the invention is a signal transfer method in a mobile communication system having a sending device and a receiving device, which communicate with each other through a radio signal, wherein

the sending device sends a notification signal in which the time length is defined to be such a time that the number of samples, when sampling at the sampling frequency, becomes the product of the exponentiation of the predetermined number of prime numbers that are taken from the smaller number, and

the receiving device detects the notification signal by performing predetermined signal processing on the signal received from the sending device.

The above and other objects, features, and advantages of the present invention will become apparent from the following description with references to the accompanying drawings which illustrate examples of the present invention.

BRIEF DESCRIPTION OF THE DRAWINGS

FIG. 1 is a diagram illustrating a general method of generating a preamble;
FIG. 2 is a block diagram showing the configuration of a mobile communication system of the present exemplary embodiment;
FIG. 3 is a block diagram showing the configuration of terminal device 12;
FIG. 4 is a block diagram showing the configuration of base station device 11;
FIG. 5 is a diagram illustrating the generation of a preamble in an example;
FIG. 6 is a diagram illustrating the detection of a preamble in the example;
FIG. 7 is a diagram illustrating the detection of a preamble in another example; and
FIG. 8 is a table showing the example of a suitable preamble length.

DETAILED DESCRIPTION OF THE PREFERRED EMBODIMENTS:

An exemplary embodiment of the present invention will be described in detail with reference to the drawings.

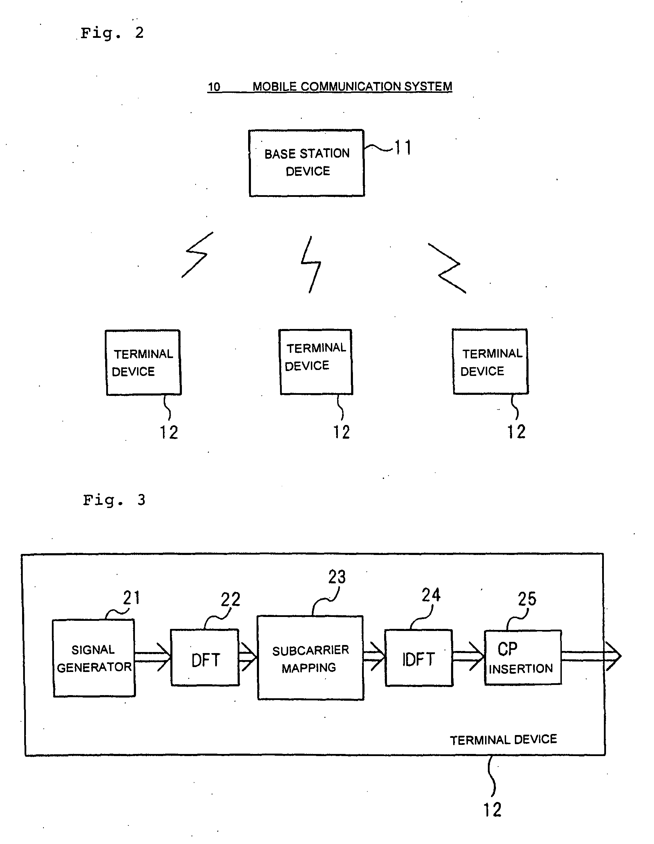

FIG. 2 is a block diagram showing the configuration of a mobile communication system of the present exemplary embodiment. Referring to FIG. 2, mobile communication system 10 includes base station device 11 and terminal device 12. Base station device 11 and terminal device 12 send/receive various signals through various transport channels on an air interface. For example, terminal device 12 sends a preamble to base station device 11 through an RACH. Hereinafter, explanation will be provided focusing on the transfer of the preamble through the RACH.

FIG. 3 is a block diagram showing the configuration of terminal device 12. Referring to FIG. 3, terminal device 12 includes signal generator 21, DFT section 22, subcarrier mapper 23, IDFT section 24 and CP inserter 25.

Signal generator 21 generates a preamble to be sent to base station device 11 (RACH sequence). A generating polynomial of a Zadoff-Chu Zero Correlation Zone (ZC-ZCZ) sequence is used to generate a ZC sequence from a predetermined parameter, and the ZC sequence is cyclic-shifted, thus the preamble is generated. Information called a signature, which is represented by the value of the parameter described above, the shift amount of cyclic shifts, or both of them, is attached to the generated preamble. The signature may be used for data transfer.

The preamble generated by signal generator 21 is a signal in a time domain, and has a predetermined time length. In the present exemplary embodiment, the predetermined time length (hereinafter referred to as "preamble time length") is defined to be such a time length that the number of samples obtained when sampling at the sampling frequency used in the mobile communication system, becomes the product of the exponentiation of the predetermined number of prime numbers that are taken from the smaller number (hereinafter referred to as "preamble sample number").

DFT section 22 transforms the RACH sequence in time domain generated by signal generator 21 into a signal in frequency domain by discrete Fourier transform (DFT).

Subcarrier mapper 23 maps the signal transformed by DFT section 22 into a frequency domain to a predetermined subcarrier (assigned frequency). The subcarrier mapping the RACH is predetermined by a base station parameter or the like.

IDFT section 24 transforms the signal in a frequency domain mapped to the subcarrier by subcarrier mapper 23 into a signal in a time domain by inverse discrete Fourier transform (IDFT). Since the time length of the preamble transformed back to the time domain by IDFT is the preamble time length described above, it is preferred that the number of samples used in IDFT is the preamble sample number.

The end of the preamble that has been returned to the signal in a time domain by IDFT section 24 is added as a cyclic prefix (CP) to the beginning of the preamble by CP inserter 25. The preamble to which the CP is attached by CP inserter 25 is transmitted over the RACH.

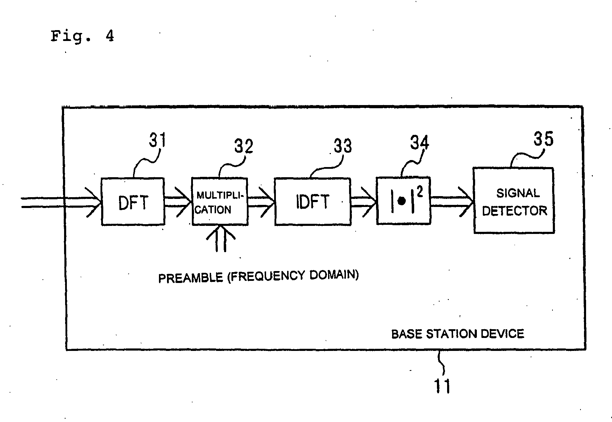

FIG. 4 is a block diagram showing the configuration of base station device 11. Referring to FIG. 4, base station device 11 includes DFT section 31, multiplier 32, IDFT section 33, power converter 34 and signal detector 35.

DFT section 31 transforms the signal received over the RACH from terminal device 12 into a signal in a frequency domain by DFT. Since the preamble that has been sent from terminal device 12 has the preamble time length, in order for the entirety of the preamble to become an input to DFT, it is sufficient that samples from the sampling of the received signal at the sampling frequency be inputted to the DFT, for a preamble sampling number that corresponds to the preamble time length. Then, DFT section 31 performs DFT with the preamble sample number.

The amount of calculation of DFT depends on the number of complex multiplications. For example, when DFT is performed by software, the larger the number of complex multiplications, the larger is the amount of processing. When the DFT is performed by hardware, the larger the number of complex multiplication, the larger is the circuit scale. In addition, the number of complex multiplications of DFT varies depending on the number of samples. Performing complex multiplications only a small number of times is sufficient if the number of samples is a value that can be expressed as a product of the exponentiation of a small prime number.

Multiplier 32 performs multiplication of a pattern from the transformation of a predetermined preamble pattern to a frequency domain and multiplication of a signal transformed to frequency domain by DFT section 31.

Note that when there is one predetermined preamble pattern (ZC sequence), and when a signature is represented by only the shift amount of the cyclic shifts with respect to this ZC sequence, multiplier 32 only needs to multiply the one preamble pattern and the output of DFT section 31.

In addition, when a plurality of preamble patterns (ZC sequences) are predetermined, and signatures are represented by the plurality of ZC sequences, multiplier 32 multiplies each of the plurality of preamble patterns and the output of DFT section 31. In this case, a constitution in which multiplier 32 is provided with a plurality of multipliers, and the output of DFT 31 is divided and input into each of the multipliers, is sufficient.

The signal that is obtained through multiplication by Multiplier 32 is transformed by IDFT section 33, using the IDFT method, into a signal in a time domain. Accordingly, a cross-correlation value between the signal received over the RACH and the preamble pattern can be obtained. Note that if the constitution is such that multiplier 32 is provided with one multiplier, it suffices that IDFT section 33 have a constitution that provides one IDFT. In addition, if the constitution is such that multiplier 32 is provided with a plurality of multipliers, it suffices that IDFT section 33 have a constitution that provides a plurality of IDFTs corresponding to respective multipliers.

Power converter 34 converts by a square operation the cross-correlation value obtained by IDFT section 33 into a value corresponding to electrical power.

Signal detector 35 detects a preamble from the output of power converter 34. More specifically, if there is a high cross-correlation value in the output of power converter 34, signal detector 35 determines that a preamble has been detected. In addition, at that time, signal detector 35 determines that the preamble of the pattern for which a high cross-correlation value was obtained is the preamble sent by terminal device 12.

The time of a peak in the delay profile of the cross-correlation value obtained by power converter 34 indicates the time when a preamble has been detected. Signal detector 35 can obtain the amount of the cyclic shift, from the time when the preamble has been detected. In addition, signal detector 35 can identify the signature based on either or both of the patterns of the identified preamble and the amount of cyclic shift.

In the mobile communication system of the present exemplary embodiment, since the time length of the preamble is defined to be such a time length that the number of samples becomes the product of the exponentiation of the predetermined number of prime numbers that are taken from the smaller number, only a small amount of calculation for detecting a preamble at base station device 11 is sufficient.

In the mobile communication system of the present exemplary embodiment, since base station device 11 has a sample number of DFT that is the product of the exponentiation of a predetermined number of prime numbers that are taken from the smaller number in a constitution in which a received signal is transformed by DFT into a frequency domain, the signal is multiplied by a preamble pattern in a frequency domain, and the signal is transformed back by IDFT to a time domain, only a small amount of calculations using DFT at base station device 11 is required.

In addition, system design using various cell radii can be considered for a mobile communication system. If the cell radius becomes large, it is preferred that the CP length and guard time are extended accordingly. Therefore, it is preferred that a different value is used according to the cell radius for the time length of a preamble and for the number of samples.

A concrete example of the present exemplary embodiment will be described below.

« Generation of RACH Preamble »

The generation scheme of RACH preamble in terminal device 12 (transmitter) is explained as follows. First, ZC sequence is generated in time domain. Here, the number of the generated ZC sequence may be a prime number. Then, it is mapped to the assigned frequency. Also, the sampling frequency of the generated RACH sequence may be transformed to fit with the transmitter's sampling frequency, which is usually $1.92 \times 2^N$ MHz.

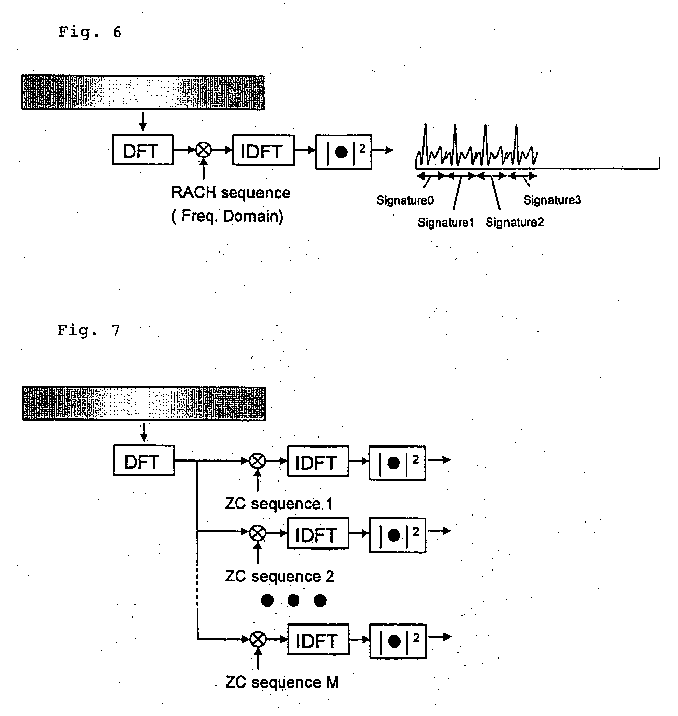

One typical method is illustrated in Figure 5. It is similar to the usual TX signal generation for DFT spread OFDM signal. The difference is that IDFT is used instead of IFFT since the number of the samples after IDFT may not be $2^N$. (The number of sample for 1msec at 1.92MHz is 1920sample, so the nearest $2^N$ number (smaller then 1920) is 1024 which seems too small.)

« Detection of RACH Preamble »

For the detection of RACH Preamble, 2 methods can be considered. One is using a sliding correlator, the other is using DFT and IDFT. In this document, the complexity is evaluated as the required number of multiplication for both method.

In order to compare 2 methods, RACH preamble length is assumed to be 1800sample@1.92MHz, i.e. 0.9375msec as an example.

<Method A : Sliding Correlator>

This method calculates the correlation of the received signal and the RACH sequence for each signature. It may be calculated for each delay. Then, the number of complex multiplication $N_{CML}$ is calculated as follows.

$$N_{CML} = N_{PRE} \times N_{RANGE} \times N_{SGN}$$

where $N_{PRE}$ is Preamble Length, $N_{RANGE}$ is Search Range, $N_{SGN}$ is the number of Signatures. The maximum search range is equivalent to the cyclic shift length, which is usually obtained by dividing Preamble Length by the number of Signatures, i.e. $N_{PRE} = N_{RANGE} / N_{SGN}$. Therefore,

$$N_{CML} = (N_{PRE})^2$$

For the case of $N_{PRE}$ = 1800, it becomes $N_{CML} = 1800^2 = 3,240,000$

<Method B : Detection by DFT>

The block diagram of this method is illustrated in Figure 6. The received signal is first transformed to frequency domain by DFT and multiplied with the Fourier transformed RACH sequence. Then the cross correlation is obtained by transforming back to time domain by IDFT.

Using this scheme, the delay profile for the cyclic delay whose range is up to the preamble length is obtained. Therefore, since the signatures are equivalent to the propagation delay, every signatures generated by cyclic shifts of the same ZC sequence can be detected simultaneously.

The number of complex multiplication $N_{CML}$ is calculated as follows.

$$N_{CML} = N_{DFT} \times 2 + N_{PRE}$$

Here $N_{DFT}$ is the number of complex multiplications required for DFT or IDFT. Using the well known technique, it is can be reduced to as follows.

$$N_{DFT} = N \times \sum_{i=1}^{M} K_i L_i$$

where ,

$$N = \prod_{i=1}^{M} K_i^{L_i}$$

For the case of $N_{CML}$ = 1800, it becomes $N_{CML}$ = 1800 x (2x3+3X2+5x2) x2 +1800 = 81,000 In this example, the number of complex multiplications is reduced to 1/40 compared with Method 1 (Sliding Correlator). It is due to the fact that the number of complex multiplications for DFT is reduced when the number of DFT points can be factored to small prime numbers.

From the above discussion, the required condition to reduce the number of complex multiplications is that the number of the samples for the RACH Preamble can be factored to small prime numbers. Therefore, we propose to make the number of the samples for the RACH Preamble $2^K x3^L x5^M$, where K, L and M are integer.

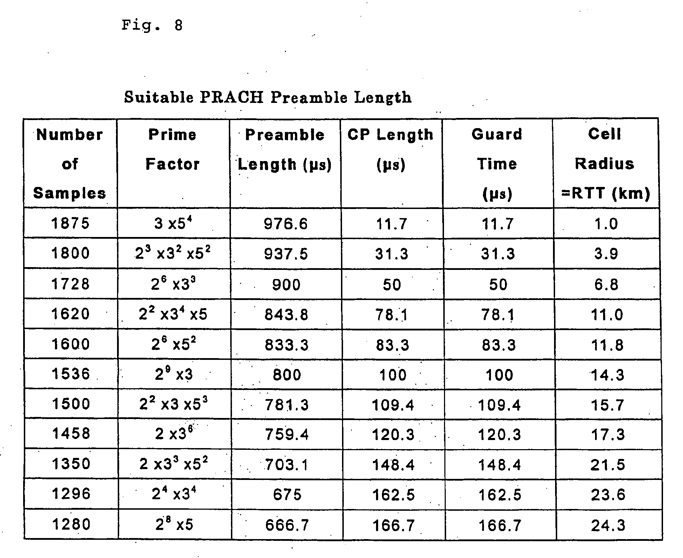

According to this requirement, the suitable PRACH Preamble length is obtained as in the table of figure 8, here the sampling frequency is assumed to 1.92MHz. The CP length, the Guard Time and the expected cell radius is also shown. Here, the delay spread is assumed to be $5\mu$s.

In addition to, it is still effective to make the number of the samples for the RACH Preamble $2^K x3^L x5^M x7^N$, where N is also an integer. According to this formula, following numbers can be the candidates of the number of samples for the RACH Preamble in addition to Figure 8. 1890, 1792, 1764, 1750, 1715, 1701, 1680, 1575, 1568, 1512, 1470, 1372

Another application is shown in Figure 7. In this case, the signatures are generated not only by cyclic shift but also by using plural ZC sequences. Therefore, after DFT, the signals are divided, multiplied with different ZC sequences, and then transformed by IDFT respectively.

While preferred exemplary embodiments of the present invention have been described using specific terms, such description is for illustrative purposes only, and it is to be understood that changes and variations may be made without departing from the spirit or scope of the following claims.

**Claims**

1. A mobile communication system comprising:

   a sending device for sending a notification signal in which a time length is defined to be such a time that the number of samples, when sampling at a sampling frequency, becomes the product of the exponentiation of a predetermined number of prime numbers that are taken from a smaller number; and
   a receiving device for detecting the notification signal by performing predetermined signal processing on a signal received from the sending device.

2. The mobile communication system according to Claim 1, wherein the receiving device uses discrete Fourier transform and inverse discrete Fourier transform to detect the notification signal.

3. The mobile communication system according to Claim 2, wherein the receiving device detects the notification signal by transforming a signal received from the sending device into a signal in a frequency domain using discrete Fourier transform, performs signal processing in a frequency domain on a frequency domain signal, and transforms the signal obtained by signal processing into the signal in time domain using inverse discrete Fourier transform.

4. The mobile communication system according to any one of Claims 1 to 3, wherein the prime number is two, three and five.

5. The mobile communication system according to any one of Claims 1 to 3, wherein the prime number is two, three, five and seven.

6. The mobile communication system according to any one of. Claims 1 to 3, wherein a different value is used for the sample number depending on a cell radius.

7. The mobile communication system according to any one of Claims 1 to 3, wherein the signal processing is to calculate a cross-correlation value between the signal received from the sending device and a predetermined signal pattern.

8. The mobile communication system according to Claim 7, wherein the sending device is a terminal device, the receiving device is a base station device, and the notification signal is a preamble used for random access.

9. The mobile communication system according to Claim 8, wherein the sequence of a preamble to which information has been attached by performing a temporal shift is used for data transfer.

10. The mobile communication system according to Claim 9, wherein the receiving device, when it detects a preamble, detects the information attached to the sequence of the preamble from the time when the preamble has been detected.

11. A signal transfer method in a mobile communication system comprising a sending device and a receiving device, which communicate with each other through a radio signal, wherein
the sending device sends a notification signal in which a time length is defined to be such a time that the number of samples, when sampling at a sampling frequency, becomes the product of the exponentiation of a predetermined number of prime numbers that are taken from a smaller number, and
the receiving device detects the notify signal by performing predetermined signal processing on a signal received from the sending device.

12. The signal transfer method according to Claim 11, wherein discrete Fourier transform and inverse discrete Fourier transform are used to detect the notification signal in the receiving device.

13. The signal transfer method according to Claim 12 wherein the receiving device detects the notification signal by transforming a signal received from the sending device into a signal in a frequency domain using discrete Fourier transform, performs signal processing in a frequency domain on a frequency domain signal, and transforms the signal obtained by signal processing into the signal in time domain using inverse discrete Fourier transform.

14. A receiving device, which forms a mobile communication system together with a sending device, comprising:

discrete Fourier transform means for transforming a notification signal in which a time length is defined to be such a time that the number of samples, when sampling at a sampling frequency, becomes the product of the exponentiation of a predetermined number of prime numbers that are taken from a smaller number into a signal in frequency domain by discrete Fourier transform;
signal processing means for performing predetermined signal processing on the output of the discrete Fourier transform means;
inverse discrete Fourier transform means for transforming the output of the signal processing means into a signal in time domain by inverse discrete Fourier transform; and
signal detection means for detecting the notification signal based on a signal transformed into time domain by inverse discrete Fourier transform.

Fig. 1

CP     ZC sequence

Signatures are generated
by Cyclic Shift

Signature 0

Signature 1

Signature 2

Signature 3

Fig. 5

RACH sequence → DFT → Sub-Carrier Mapping → IDFT → CP insertion →
Generation →

1.25Msps x0.9~1ms

( Prime Number is expected )

1.92Msps x0.9~1ms

( Prime Number is not necessary )

Fig. 2

10 MOBILE COMMUNICATION SYSTEM

BASE STATION DEVICE — 11

TERMINAL DEVICE

12

TERMINAL DEVICE

12

TERMINAL DEVICE

12

Fig. 3

| SIGNAL GENERATOR 21 | DFT 22 | SUBCARRIER MAPPING 23 | IDFT 24 | CP INSERTION 25 |

TERMINAL DEVICE

12

Fig. 4

PREAMBLE (FREQUENCY DOMAIN)

BASE STATION DEVICE

11

Fig. 6

DFT → ⊗ → IDFT → $|\bullet|^2$ →

RACH sequence
( Freq. Domain)

Signature0    Signature3
Signature1  Signature2

Fig. 7

DFT

⊗ → IDFT → $|\bullet|^2$ →
ZC sequence 1

⊗ → IDFT → $|\bullet|^2$ →
ZC sequence 2

● ● ●

⊗ → IDFT → $|\bullet|^2$ →
ZC sequence M

Fig. 8

Suitable PRACH Preamble Length

| Number of Samples | Prime Factor | Preamble Length (µs) | CP Length (µs) | Guard Time (µs) | Cell Radius =RTT (km) |
|---|---|---|---|---|---|
| 1875 | $3 \times 5^4$ | 976.6 | 11.7 | 11.7 | 1.0 |
| 1800 | $2^3 \times 3^2 \times 5^2$ | 937.5 | 31.3 | 31.3 | 3.9 |
| 1728 | $2^6 \times 3^3$ | 900 | 50 | 50 | 6.8 |
| 1620 | $2^2 \times 3^4 \times 5$ | 843.8 | 78.1 | 78.1 | 11.0 |
| 1600 | $2^6 \times 5^2$ | 833.3 | 83.3 | 83.3 | 11.8 |
| 1536 | $2^9 \times 3$ | 800 | 100 | 100 | 14.3 |
| 1500 | $2^2 \times 3 \times 5^3$ | 781.3 | 109.4 | 109.4 | 15.7 |
| 1458 | $2 \times 3^6$ | 759.4 | 120.3 | 120.3 | 17.3 |
| 1350 | $2 \times 3^3 \times 5^2$ | 703.1 | 148.4 | 148.4 | 21.5 |
| 1296 | $2^4 \times 3^4$ | 675 | 162.5 | 162.5 | 23.6 |
| 1280 | $2^8 \times 5$ | 666.7 | 166.7 | 166.7 | 24.3 |

**EP 1 909 446 A2**

REFERENCES CITED IN THE DESCRIPTION

**Patent documents cited in the description**

- JP 2006271455 A
- JP 2006338372 A
- JP 2007211717 A